# EUROPÄISCHE PATENTANMELDUNG

(11) **EP 4 633 182 A1**
(43) Veröffentlichungstag der Anmeldung: **15.10.2025**
(21) Anmeldenummer: 25169243.0
(22) Anmeldetag: 08.04.2025
(51) Int. Cl.: H04N 23/661, H04N 7/18, H04N 23/63

(54) **SYSTEM ZUM ÜBERTRAGEN DES BLICKFELDES EINER PERSON**

(30) Priorität: 08.04.2024 DE 202024101679 U
(71) Anmelder: Zürn Harvesting GmbH & Co. KG, 74214 Schöntal-Westernhausen (DE)
(72) Erfinder: Züm, Rolf, 74214 Schöntal (DE)
(74) Vertreter: Manitz Finsterwald Patent- und Rechtsanwaltspartnerschaft mbB

(57) **Zusammenfassung**

System zum optischen Erfassen und instantanen elektronischen Weiterleiten mindesten eines Teils des Blickfeldes einer Person zusammen mit einem variabel bestimmbaren, im Blickfeld der Person optisch dargestellten Fokuspunkt der betreffenden Person an eine räumlich entfernte Empfangs- und Wiedergabestation, mit einer Bildaufnahmeeinheit und einer Fokuspunkterzeugungseinheit, die mittels eines Trägerelements am Kopf der Person fixierbar sind, und mit einer Bildübertragungseinheit zur Übertragung des mindestens einen Teils des Blickfeldes zusammen mit dem optisch dargestellten Fokuspunkt an die räumlich entfernte Empfangs- und Wiedergabestation.

## Beschreibung

Die vorliegende Erfindung betrifft ein System zum optischen Erfassen und instantanen elektronischen Weiterleiten mindestens eines Teils des Blickfeldes einer Person an eine räumlich entfernte Empfangs- und Wiedergabestation.

Bei Service- oder Reparaturarbeiten, beispielsweise an Maschinen oder Industrieanlagen, besteht oftmals das Problem, dass die Person vor Ort Hilfe oder Anweisungen einer räumlich entfernten anderen Person benötigt. Zur besseren Unterstützung der Person vor Ort ist es hilfreich, wenn die entfernte Person den Einsatzort sehen kann, insbesondere das Blickfeld der Person vor Ort.

Das Erfassen des Blickfeldes einer Person vor Ort kann beispielsweise mit einem Mobiltelefon mit Kamera oder mit einer Brille mit eingebauter Kamera erfolgen. Das aufgenommene Bild kann mittels des Mobiltelefons oder einer anderen Einrichtung zu der entfernten Person übertragen werden.

Der Erfindung liegt die Aufgabe zugrunde, ein derartiges System zu verbessern.

Diese Aufgabe wird durch ein System gemäß Anspruch 1 gelöst, d.h., durch ein System zum optischen Erfassen und instantanen elektronischen Weiterleiten mindesten eines Teils des Blickfeldes einer Person zusammen mit einem variabel bestimmbaren, im Blickfeld der Person optisch dargestellten Fokuspunkt der betreffenden Person an eine räumlich entfernte Empfangs- und Wiedergabestation, mit einer Bildaufnahmeeinheit und einer Fokuspunkterzeugungseinheit, die mittels eines Trägerelements am Kopf der Person fixierbar sind, und mit einer Bildübertragungseinheit zur Übertragung des mindestens einen Teils des Blickfeldes zusammen mit dem optisch dargestellten Fokuspunkt an die räumlich entfernte Empfangs- und Wiedergabestation.

Durch das Erzeugen und Übertragen eines Fokuspunktes zusammen mit dem mindestens einen Teil des Blickfeldes kann einer sich bei der entfernten Empfangs- und Wiedergabestation befindenden Person mitgeteilt werden, welcher Teil der Industrieanlage oder der Maschine oder eines anderen Gegenstandes des Service- oder Reparatureinsatzes zu behandeln ist. Durch Bewegen des Kopfes kann die Person vor Ort das zusammen mit dem Fokuspunkt übertragene Blickfeld bestimmen. Die Unterstützung durch die entfernte Person kann dadurch verbessert werden.

Nach einer Weiterbildung der Erfindung sind die Bildaufnahmeeinheit und/oder die Fokuspunkterzeugungseinheit in ihrer räumlichen Orientierung relativ zum Trägerelement verstellbar. Damit kann ein passender Teil des Blickfeldes erfasst bzw. ein gewünschter Fokuspunkt auf vorteilhafte Weise erzeugt werden.

Nach einer weiteren Ausgestaltung der Erfindung umfasst das System eine Tonaufnahme- und/oder Wiedergabeeinheit, die insbesondere zur Sprachübertragung zwischen der Person vor Ort und einer weiteren, sich insbesondere bei der Empfangs- und Wiedergabestation befindenden Person ausgebildet ist. Dadurch kann eine Kommunikation zwischen den beiden Personen ermöglicht werden.

Zur Tonaufnahme und zur Tonwiedergabe sind insbesondere ein Mikrofon und ein Lautsprecher vorgesehen. Die Bildaufnahmeeinheit ist insbesondere als Kamera ausgebildet. Als Fokuspunkterzeugungseinheit dient bevorzugt ein Laserpointer.

Nach weiteren Ausgestaltungen der Erfindung kann das Trägerelement als Stirnband, Brille oder Helm ausgebildet sein. Als Bildübertragungseinheit und/oder als Tonübertragungseinheit kann ein Mobiltelefon dienen.

Nach einer weiteren Ausgestaltung der Erfindung ist die Tonaufnahme- und/oder Wiedergabeeinheit am Trägerelement vorgesehen. Die Handhabung des erfindungsgemäßen Systems ist dadurch vereinfacht.

Nach einer weiteren Ausgestaltung der Erfindung sind die Bildaufnahmeeinheit und die Fokuspunkterzeugungseinheit in einer Baueinheit zusammengefasst, die insbesondere lösbar mit dem Trägerelement verbindbar ist. Dadurch ergibt sich eine kompakte Baueinheit, die variabel einsetzbar ist.

## Patentansprüche

1. System zum optischen Erfassen und instantanen elektronischen Weiterleiten mindesten eines Teils des Blickfeldes einer Person zusammen mit einem variabel bestimmbaren, im Blickfeld der Person optisch dargestellten Fokuspunkt der betreffenden Person an eine räumlich entfernte Empfangs- und Wiedergabestation, mit einer Bildaufnahmeeinheit und einer Fokuspunkterzeugungseinheit, die mittels eines Trägerelements am Kopf der Person fixierbar sind, und mit einer Bildübertragungseinheit zur Übertragung des mindestens einen Teils des Blickfeldes zusammen mit dem optisch dargestellten Fokuspunkt an die räumlich entfernte Empfangs- und Wiedergabestation.

2. System nach Anspruch 1,
**dadurch gekennzeichnet, dass** die Bildaufnahmeeinheit und/oder die Fokuspunkterzeugungseinheit in ihrer räumlichen Orientierung relativ zum Trägerelement verstellbar sind.

3. System nach Anspruch 1 oder 2,
**dadurch gekennzeichnet, dass** das System eine Tonaufnahme- und/oder Wiedergabeeinheit umfasst, die insbesondere zur Sprachübertragung zwischen der Person und einer weiteren, sich insbesondere bei der Empfangs- und Wiedergabestation befindenden Person ausgebildet ist.

4. System nach Anspruch 3,
**dadurch gekennzeichnet, dass** zur Tonaufnahme ein Mikrofon und zur Tonwiedergabe ein Lautsprecher vorgesehen ist.

5. System nach einem der vorhergehenden Ansprüche,
**dadurch gekennzeichnet, dass** die Bildaufnahmeeinheit als Kamera ausgebildet ist.

6. System nach einem der vorhergehenden Ansprüche,
**dadurch gekennzeichnet, dass** die Fokuspunkterzeugungseinheit als Laserpointer ausgebildet ist.

7. System nach einem der vorhergehenden Ansprüche,
**dadurch gekennzeichnet, dass** das Trägerelement als Stirnband, Brille oder Helm ausgebildet ist.

8. System nach einem der vorhergehenden Ansprüche,
**dadurch gekennzeichnet, dass** die Bilderübertragungseinheit als Mobiltelefon ausgebildet ist.

9. System nach Anspruch 8,
**dadurch gekennzeichnet, dass** das Mobiltelefon zugleich zur Übertragung der Tonsignale ausgebildet ist.

10. System nach einem der Ansprüche 3 bis 9,
**dadurch gekennzeichnet, dass** die Tonaufnahme- und/oder Wiedergabeeinheit am Trägerelement vorgesehen ist.

11. System nach einem der vorhergehenden Ansprüche,
**dadurch gekennzeichnet, dass** die Bildaufnahmeeinheit und die Fokuspunkterzeugungseinheit in einer Baueinheit zusammengefasst sind, die insbesondere lösbar mit dem Trägerelement verbindbar ist.

12. Verwendung des Systems nach einem der vorhergehenden Ansprüche bei der Durchführung von Service- und/oder Reparaturarbeiten, insbesondere an Industrieanlagen oder Maschinen.
